Europäisches Patentamt

(19) European Patent Office

Office européen des brevets

(11) Publication number: **0 120 827**

**A2**

(12) **EUROPEAN PATENT APPLICATION**

(21) Application number: **84850083.1**

(22) Date of filing: **14.03.84**

(51) Int. Cl.³: **F 16 N 7/36**
F 04 D 1/14, F 16 J 15/34

(30) Priority: **24.03.83 SE 8301618**

(43) Date of publication of application:
**03.10.84 Bulletin 84/40**

(84) Designated Contracting States:
**DE FR GB IT NL**

(71) Applicant: **Flygt AB**
**Box 1309**
**S-171 25 Solna(SE)**

(72) Inventor: **Carlsson, Valdemar**
**Illerstigen 8**
**S-171 17 Solna(SE)**

(72) Inventor: **Fredriksson, Boris**
**Bläcksvampsvägen 16**
**S-141 46 Huddinge(SE)**

(74) Representative: **Larsson, Sten**
**Flygt AB Box 1309**
**S-171 25 Solna(SE)**

(54) **A mechanical seal device.**

㊒ This invention concerns a device for transporting lubricant to the mechanical seals in a submersible machine.

A funnel formed guide means (5) is arranged on the rotating shaft (1) in an oilroom (4). Thanks to the funnel form oil will be sucked in at the small end of the guide means and flow out at its big end thus obtaining a transport of oil.

EP 0 120 827 A2

A MECHANICAL SEAL DEVICE

This invention concerns a device to be used in connection with mechanical seals meant to seal the lead-in of a rotating shaft between two rooms containing different media.

Mechanical seals are often used in submersible electrically operated machines, such as pumps, turbines and mixers, to seal the driving shaft between driving unit and hydraulic unit, said shaft normally going through an oilroom between said units. The seals, one between driving unit and oilroom and one between oilroom and hydraulic unit, contain one rotating and one non-rotating sealring which are pressed towards each other by spring force.

The spring force must be relatively strong to secure a good sealing. Lubricant must be brought continously to the contact surfaces. As lubricant, oil is usually used which is contained in the oilhousing.

In a submersible pump of a conventional type where the driving unit is arranged on top of the pump housing, there are normally no problem to bring lubricant to the seals as these are usually covered by the oil in the oilhousing. If on the contrary, the driving unit is arranged under or beside the hydraulic unit, problems with bringing the oil to the seals may occur.

A way to solve this problem is to arrange a pumping device of some sort to bring oil up to the upper seal, (Sw Pat 7401606-4). This known device does however not function if the driving shaft takes an essentially horizontal position.

According to the invention the problem to transport oil to a seal situated above the surface in the oilroom in a submersible machine is solved by help of the device disclosed in the following claims.

2

**0120827**

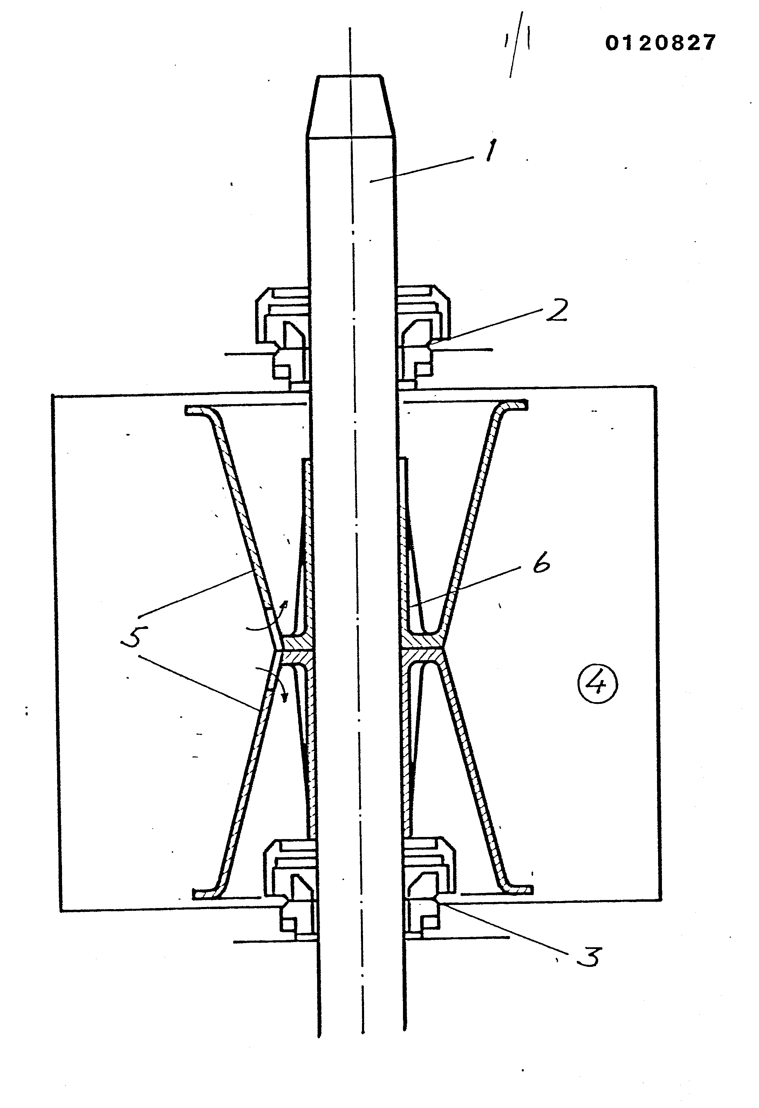

In the drawing 1 stands for a shaft sealed by two mechanical seals 2 and 3. 4 stands for an oilroom, 5 two funnel formed guide means and 6 fins on the latter.

In the shown embodiment the driving shaft 1 is arranged vertically and the upper seal 2 is situated above the surface in the oilroom 4. The two guide means 5 are rigidly connected to the shaft and thus rotates with the latter. The guide means have openings at the top and at the bottom through which the liquid may be transported.

When the shaft rotates the liquid is brought by the guide means which effect is increased by fins within the guide. Due to the funnel form, the liquid is transported upwards in the upper guide and downwards in the lower guide by the centrifugal force, thus obtaining a flow according to the arrows in the drawing. This means that a sufficient oil support to the upper seal is always obtained as long as the level in the oilroom 4 is somewhat above the middle, that is, levels with the openings in the lower part of the upper guide means.

If the shaft is horizontal, oil will in a similar way be transported in the guide means 5 as long as the oil levels the shaft.

According to the invention a device is obtained which in a simple way provides for a secure oil transport to the seals in a submersible machine, even if the level in the oilhousing would go down to about one half.

CLAIMS

1   A device i connection with mechanical seals for sealing the lead-
    in of a rotating shaft between two rooms parted by a room contain-
    ing a lubricant, c h a r a c t e r i z e d  in that the device
    comprises at least one funnel formed guide means (5) within the
    oilroom (4), which means is rigidly connected to the driving shaft
    (1) and having its bigger end turned towards one of the seals (2),
    (3) and provided with openings in both ends for transport of lubricant towards said seal.

2   A device according to claim 1, c h a r a c t e r i z e d  in that
    it comprises two guide means (5) the smaller ends of which are
    heading each other.

0120827